# EUROPÄISCHE PATENTSCHRIFT

(11) **EP 2 215 943 B1**
(45) Veröffentlichungstag und Bekanntmachung des Hinweises auf die Patenterteilung: **18.07.2012**
(21) Anmeldenummer: 10151128.5
(22) Anmeldetag: 19.01.2010
(51) Int. Cl.: A47J 31/44

(54) **Gerät für eine Getränkeausgabe**
Device for dispensing drinks
Appareil pour une distribution de boissons

(30) Priorität: 06.02.2009 DE 202009001492 U
(43) Veröffentlichungstag der Anmeldung: 11.08.2010
(73) Patentinhaber: MELITTA HAUSHALTSPRODUKTE GmbH & Co. Kommanditgesellschaft, 32427 Minden (DE)
(72) Erfinder: Aus der Fünten, Sandra, 33739, Bielefeld (DE); Aengenheyster, Gerald, 32427, Minden (DE); Krutemeyer, Nils, 32278, Kirchlengern (DE)
(74) Vertreter: Dantz, Jan Henning

(56) Entgegenhaltungen:
- CH-A- 487 636
- DE-A1- 3 903 003
- DE-U1- 7 915 161
- US-A- 5 161 455
- US-A- 5 353 692

## Beschreibung

Die vorliegende Erfindung betrifft ein Gerät für eine Getränkeausgabe, insbesondere einen Kaffeeautomaten, mit einem Gehäuse, an dem an einer Seite ein Auslass zur Ausgabe eines zubereiteten Getränkes vorgesehen ist, und einer ersten Auflage unterhalb des Auslasses, an der ein Gefäß zur Befüllung abstellbar ist.

In der EP 1 745 726 ist ein Kaffeeautomat mit einer höhenverstellbaren Auslaufeinheit gezeigt, die über eine vertikale Führung an einem Gehäuse verfahrbar ist. Dadurch kann abhängig von der Größe eines Gefäßes unterhalb der Auslasseinheit eine vertikale Positionierung erfolgen, während eine Tassenauflage fest an dem Gehäuse angeordnet ist. Zwar kann dadurch eine Höhenanpassung der Auslaufeinheit vorgenommen werden, allerdings erfordert dies einen biegbaren Schlauch beim Zulauf der Auslaufeinheit. Gerade bei der Anordnung mehrerer verschiedener Leitungen an einer Auslaufeinheit wird der bauliche Aufwand durch die Vielzahl der Schläuche relativ groß. Zudem kann die vertikale Führung leicht verklemmen und ist mühsam in der Handhabung.

Ferner ist es bekannt, die Auffangschale höhenverstellbar auszugestalten (EP 1 639 926). Hierfür ist eine Verstellvorrichtung mit einer vertikal verlaufenden Zahnschiene vorgesehen, an der die Auffangschale fixierbar ist. Die vertikale Verstellung der Auffangschale besitzt jedoch das Problem, dass leicht ein Verklemmen erfolgen kann und der Verstellvorgang vom Benutzer als mühsam empfunden wird. Zudem ist die Verstellvorrichtung mit zahlreichen Einzelteilen relativ komplex und aufwendig.

Die US 5 353 692 offenbart ein Gerät zur Getränkezubereitung, bei dem eine Tassenauflage verschwenkbar an dem Gehäuse gelagert ist. Die Tassenauflage kann von einer Position im Gehäuse durch einen Schlitz im Gehäuse in eine Position mit Auflage unterhalb eines Auslasses verschwenkt werden.

Die DE 39 03 003 zeigt eine Kaffeemaschine mit nach oben und unten verstellbarer Auflageplatte. Hierfür sind an der Kaffeemaschine mehrere Aufnahmen ausgebildet, in die die Auflageplatte eingesteckt werden kann.

Die US 5 161 455 zeigt ein Gerät für eine Getränkeausgabe gemäss Oberbegriff des Anspruchs 1.

Es ist daher Aufgabe der vorliegenden Erfindung, ein Gerät für eine Getränkeausgabe zu schaffen, das die genannten Nachteile des Standes der Technik vermeidet und eine einfache Anpassung an unterschiedlich große Gefäße ermöglicht.

Diese Aufgabe wird mit einem Gerät mit den Merkmalen des Anspruches 1 gelöst.

Erfindungsgemäß umfasst das Gerät einen Auslass für die Getränkeausgabe, unterhalb dem eine erste Auflage angeordnet ist. Oberhalb der ersten Auflage ist mindestens eine an dem Gehäuse festlegbare zweite Auflage vorgesehen, sodass abhängig von der Größe eines zu befüllenden Gefäßes die erste oder zweite Auflage zum Abstellen des Gefäßes eingesetzt werden kann. Die zweite Auflage ist dabei an dem Gehäuse festlegbar, sodass auf eine aufwendige Verstellung des Auslasses und/oder der ersten Tassenauflage verzichtet werden kann. Zudem muss zur Montage der zweiten Auflage auch keine aufwendige Konstruktion an der ersten Auflage vorgesehen sein.

Die zweite Auflage ist dabei in eine Öffnung an dem Gehäuse einschiebbar. Dadurch kann die Auflage in das Gehäuse eingeschoben werden, sodass die Auflage bei Nichtbenutzung verdeckt im Gehäuse angeordnet ist. Dies ermöglicht eine einfache Handhabung für den Benutzer, der sich nicht um die Aufbewahrung der zweiten Auflage kümmern muss.

Die zweite Auflage ist an einer horizontalen Führung verschiebbar gehalten. Die horizontale Führung kann durch u-förmige Leisten gebildet sein, in denen die Auflage an gegenüberliegenden Seiten verschiebbar geführt ist. Dadurch werden aufwendige Wälzlager vermieden.

Für eine kompakte Bauweise ist die zweite Auflage in einer eingefahrenen Position in dem Gehäuse verrastbar. Dabei ist die zweite Auflage über eine Feder in eine ausgefahrene Position vorgespannt, sodass durch eine einfache Bedienung die zweite Auflage automatisch in eine ausgefahrene Position über die Kraft der Feder bewegt wird. Dabei kann die Bewegung der zweiten Auflage sowohl mechanisch über eine Feder als auch über einen Antrieb erfolgen. Besonders geeignet sind mechanische Rastlösungen, bei denen durch Betätigung eines Schalters oder durch Eindrücken der zweiten Auflage ein Rastmechanismus entriegelt wird, damit die zweite Auflage aus dem Gehäuse herausfährt. Die Feder wird dann beim manuellen Einschieben der Auflage wieder gespannt, wobei die Auflage in der eingefahrenen Position wieder verrastet wird.

In einer weiteren Ausgestaltung der Erfindung ist die zweite Auflage kleiner ausgebildet als die erste Auflage, vorzugsweise um mehr als 50 %. Dadurch wird dem Benutzer auch visualisiert, dass auf der zweiten Auflage nur kleinere Behälter mit einem geringeren Volumen befüllt werden sollen.

Um ein Überlaufen von Flüssigkeit an der zweiten Auflage zu vermeiden, ist an der zweiten Auflage mindestens eine Ablauföffnung vorgesehen. Dadurch kann Flüssigkeit, die aus dem Auslass strömt, direkt an die erste Auflage und einen darunter befindlichen Sammelbehälter abgegeben werden.

Vorzugsweise ist zusätzlich eine dritte Auflage unterhalb des Auslasses und oberhalb der ersten Auflage vorgesehen, sodass noch eine feinere Untergliederung der Stellhöhe vorgesehen ist.

Die Erfindung wird nachfolgend anhand eines Ausführungsbeispieles mit Bezug auf die beigefügten Zeichnungen näher erläutert. Es zeigen:

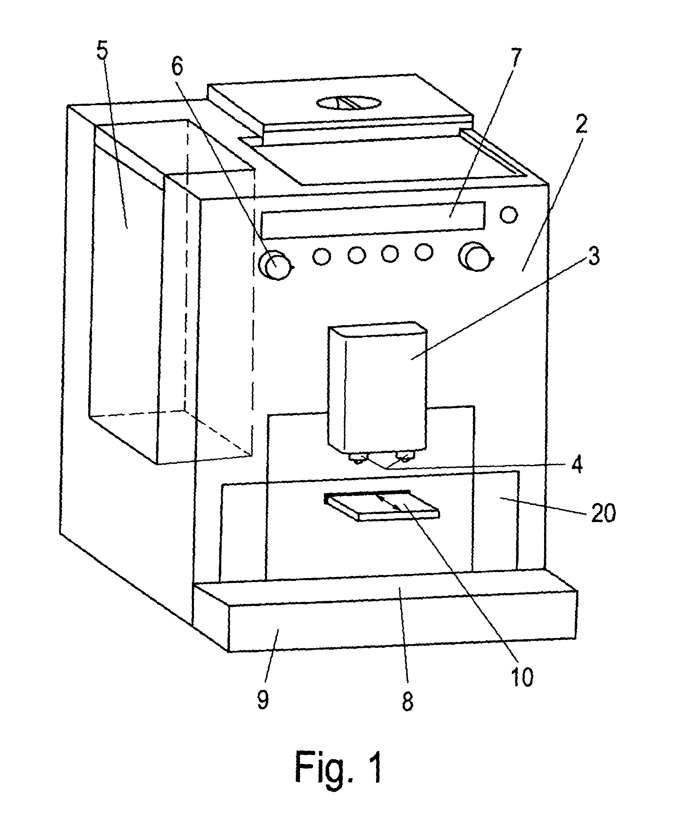

- Figur 1: eine perspektivische Ansicht eines erfindungsgemäßen Gerätes;
- Figur 2: eine perspektivische Ansicht des Gerätes der Figur 1 im Bereich der zweiten Auflage;
- Figur 3: eine Seitenansicht der zweiten Auflage in der ausgefahrenen Position, und
- Figur 4: eine Seitenansicht der zweiten Auflage in der eingefahrenen Position.

Ein Gerät 1 für die Getränkeausgabe, insbesondere ein Kaffeeautomat, umfasst ein Gehäuse 2, an dem an einer Vorderseite ein Auslass 3 angeordnet ist. An dem Auslass 3 befinden sich zwei Auslassrohre 4, wobei auch mehr Auslassrohre an dem Auslass 3 vorgesehen sein können.

Das Gerät 1 umfasst einen Wassertank 5 und eine in dem Gehäuse 2 angeordnete Brüheinheit für Kaffee. Der Brühvorgang erfolg automatisch, wobei der Benutzer über Schalter 6 und eine Anzeige 7 verschiedene Programme zur Zubereitung von Getränken auswählen kann, insbesondere kann auch eine Mengendosierung stattfinden.

Um die in dem Gerät zubereiteten Getränke in Gefäße zu füllen, ist an einem Boden des Gehäuses 2 eine Auffangschale 9 vorgesehen, die über die Vorderseite hervorsteht und auf der eine erste Auflage 8 für ein Gefäß angeordnet ist. Die Auflage 8 kann Öffnungen aufweisen, damit Flüssigkeit in die Auffangschale 9 abfließen kann.

Die erste Auflage 8 ist relativ weit von dem Auslass 3 beabstandet, damit große Gefäße abgestellt werden können. Beim Abstellen von kleineren Gefäßen auf der ersten Auflage 8 könnte beim Einfüllen des zubereiteten Getränks dies zu Verunreinigungen durch Spritzer sorgen. Daher ist eine zweite Auflage 10 vorgesehen, die oberhalb der ersten Auflage 8 und unterhalb des Auslasses 3 angeordnet ist. Die zweite Auflage 10 ist an einer Vorderseite des Gehäuses 2 an einem Gehäuseabschnitt 20 montiert.

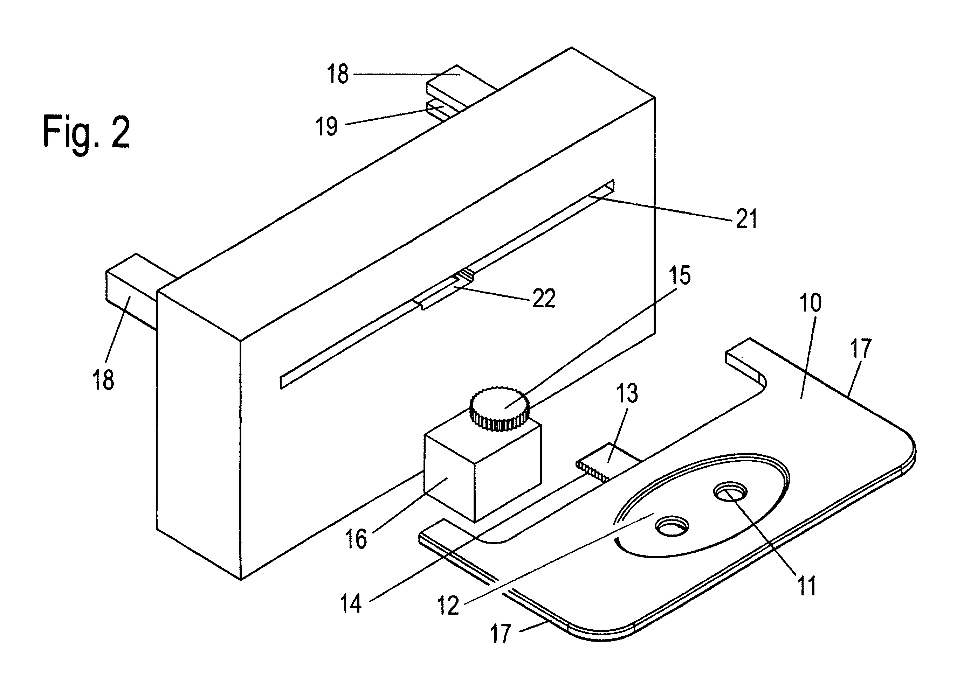

Wie in Figur 2 gezeigt ist, umfasst der Gehäuseabschnitt 20 eine schlitzförmige horizontale Öffnung 21 mit einer mittigen Ausnehmung 22. Die zweite Auflage 10 ist plattenförmig ausgebildet und kann in den Schlitz 21 in dem Gehäuseabschnitt 20 eingeschoben werden. Die zweite Auflage 10 umfasst einen vertieften Bereich 12, an dem zwei Öffnungen 11 ausgespart sind. In der ausgefahrenen Position liegen die Öffnungen 11 unterhalb der beiden rohrförmigen Auslässe 4, sodass bei einer versehentlichen Ausgabe eines Getränks ohne ein Gefäß auf der zweiten Auflage 10 die Flüssigkeit in den Sammelbehälter durch die zweite Auflage 10 und die erste Auflage 8 strömen kann.

Zur Führung der zweiten Auflage 10 ist in dem Gehäuseabschnitt 20 an gegenüberliegenden Seiten jeweils eine u-förmige Leiste 18 angeordnet, die auf der nach innen gewandten Seite eine Nut 19 ausbildet. In der Nut 19 ist ein Randabschnitt 17 der zweiten Auflage 10 gehalten.

Zur Bewegung des zweiten Abschnittes 10 ist ein Antrieb 16 vorgesehen, der über ein Antriebsrad 15 eine Stange 13 mit einer Verzahnung 14 antreibt. Die Stange 13 ist an der Unterseite der zweiten Auflage 10 festgelegt.

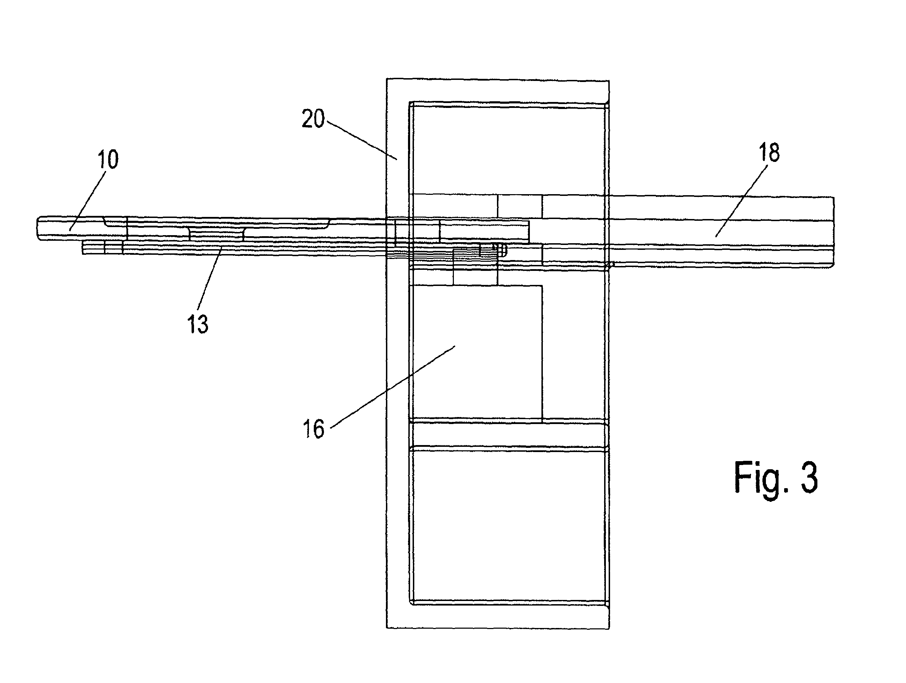

In Figur 3 ist die zweite Auflage 10 in der ausgefahrenen Position gezeigt, in der die Auflage 10 von dem Gehäuseabschnitt 20 hervorsteht. Lediglich ein kleiner Teil der zweiten Auflage 10 ist in der horizontalen Führung 18 gehalten.

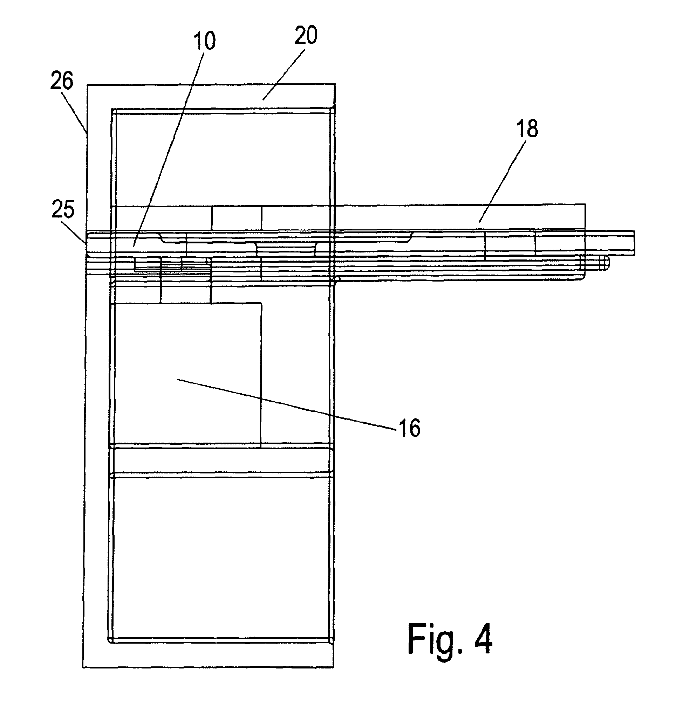

In Figur 4 ist die zweite Auflage 10 in dem Gehäuseabschnitt 20 eingefahren. Hierfür hat der Antrieb 16 über das Antriebsrad 15 und die Stange 13 mit der Verzahnung 14 die zweite Auflage 10 in den Gehäuseabschnitt 20 bewegt. Eine Vorderkante 25 der zweiten Auflage 10 schließt bündig mit einer Vorderseite 26 des Gehäuseabschnittes 20 ab, sodass optisch ein geschlossenes Erscheinungsbild vorhanden ist.

In dem dargestellten Ausführungsbeispiel ist die zweite Auflage 10 über einen Motor verfahrbar. Der Motor wird dabei über eine Steuerung des Gerätes 1 angesteuert und es können Sensoren vorgesehen sein, damit ein Hindernis beim Ausfahren der zweiten Auflage 10 erkannt wird und ein Umwerfen eines Gefäßes oder andere Unfälle beim Ausfahren der zweiten Auflage 10 vermieden werden. Statt eines motorischen Antriebes kann auch eine mechanische Lagerung der zweiten Auflage 10 erfolgen, wobei eine Feder vorhanden ist, die die zweite Auflage 10 in die ausgefahrene Position vorspannt. Ferner ist ein Rastmechanismus vorgesehen, um die zweite Auflage 10 in der eingefahrenen Position an dem Gehäuseabschnitt 20 zu verrasten. Durch eine Entriegelung durch Eindrücken des zweiten Abschnittes, einen Entriegelungsschalter oder eine automatische Entriegelung kann dann die zweite Auflage 10 durch die Kraft der Feder in die ausgefahrene Position bewegt werden. Die Feder wird dann beim manuellen Einschieben der zweiten Auflage 10 wieder gespannt.

In dem dargestellten Ausführungsbeispiel ist eine zweite Auflage 10 zwischen dem Auslass 3 und der ersten Auflage 8 vorgesehen. Es ist natürlich auch möglich, eine dritte und weitere Auflagen an dem Gehäuseabschnitt 20 vorzusehen, sodass eine feinere Höheneinstellung möglich ist.

## Patentansprüche

1. Gerät (1) für eine Getränkeausgabe, insbesondere Kaffeeautomat, mit einem Gehäuse (2), an dem an einer Seite ein Auslass (3) zur Ausgabe eines zubereiteten Getränks vorgesehen ist, und einer ersten Auflage (8) unterhalb des Auslasses (3), an der ein Gefäß zur Befüllung abstellbar ist, wobei oberhalb der ersten Auflage (8) mindestens eine an dem Gehäuse festlegbare zweite Auflage (10) vorgesehen ist, die in eine Öffnung (21) an dem Gehäuse (2) einschiebbar ist, wobei die zweite Auflage (10) an einer horizontalen Führung (18) verschiebbar gehalten ist, **dadurch gekennzeichnet, dass** die zweite Auflage (10) in dem Gehäuse (2) in einer eingefahrenen Position verrastbar ist, und dass die zweite Auflage (10) über eine Feder in eine ausgefahrene Position vorgespannt ist.

2. Gerät nach Anspruch 1, **dadurch gekennzeichnet, dass** die zweite Auflage (10) kleiner ausgebildet ist als die erste Auflage (8), vorzugsweise um mehr als 50 %.

3. Gerät nach Anspruch 1 oder 2, **dadurch gekennzeichnet, dass** in der zweiten Auflage (10) mindestens eine Ablauföffnung (11) vorgesehen ist.

4. Gerät nach einem der Ansprüche 1-3, **dadurch gekennzeichnet, dass** eine dritte Auflage unterhalb des Auslasses (3) und oberhalb der ersten Auflage (8) vorgesehen ist.

## Claims

1. Apparatus (1) for beverage dispensing, particularly coffee machine, with a housing (2) at which at one side an outlet (3) for dispensing a prepared beverage is provided, and a first support (8), on which a vessel for filling is placeable, below the outlet (3), wherein provided above the first support (8) is at least one second support (10) which is fixable to the housing and which is insertable into an opening (21) at the housing (2), wherein the second support (10) is mounted to be displaceable at a horizontal guide (18), **characterised in that** the second support (10) is detentable in the housing (2) in a retracted position and that the second support (10) is biased by way of a spring into an extended position.

2. Apparatus according to claim 1, **characterised in that** the second support (10) is constructed to be smaller, preferably by more than 50%, than the first support (8).

3. Apparatus according to claim 1 or 2, **characterised in that** at least one drain opening (11) is provided in the second support (10).

4. Apparatus according to any one of claims 1 to 3, **characterised in that** a third support is provided below the outlet (3) and above the first support (8).

## Revendications

1. Appareil (1) pour la distribution de boissons, en particulier distributeur de café automatique comportant un boîtier (2) sur un côté (3) duquel est montée une sortie (3) pour la distribution d'une boisson préparée, et un premier support (8) situé au dessous de la sortie (3) et sur lequel un récipient à remplir peut être positionné, au moins un second support (10) pouvant être placé sur le boîtier, ce second support (10) pouvant coulisser dans une ouverture (21) du boîtier (2), et étant maintenu mobile en translation sur un élément de guidage horizontal (18),
**caractérisé en ce que**
le second support (10) peut être encliqueté dans le boîtier (2), dans une position rétractée et est précontraint par un ressort dans une position déployée.

2. Appareil conforme à la revendication 1,
**caractérisé en ce que**
le second support (10) est plus petit que le premier support (8), de préférence de plus de 50 %.

3. Appareil conforme à la revendication 1 ou 2,
**caractérisé en ce que**
dans le second support (10) il est prévu au moins une ouverture d'évacuation (11).

4. Appareil conforme à l'une des revendications 1 à 3,
**caractérisé en ce qu'**
il est prévu un troisième support monté au dessous de la sortie (3) et au-dessus du premier support (8).
